(19) Europäisches Patentamt
European Patent Office
Office européen des brevets

(11) **EP 3 771 374 B1**

(12) **EUROPÄISCHE PATENTSCHRIFT**

(45) Veröffentlichungstag und Bekanntmachung des Hinweises auf die Patenterteilung:
**06.09.2023 Patentblatt 2023/36**

(21) Anmeldenummer: **20185048.4**

(22) Anmeldetag: **09.07.2020**

(51) Internationale Patentklassifikation (IPC):
**A47J 36/32** *(2006.01)* **A47J 43/07** *(2006.01)*

(52) Gemeinsame Patentklassifikation (CPC):
**A47J 36/32; A47J 43/07**

(54) **KÜCHENMASCHINE UND VERFAHREN ZUM BETRIEB EINES RÜHR-WERKZEUGS EINER KÜCHENMASCHINE**

KITCHEN APPLIANCE AND METHOD FOR OPERATING A MIXING TOOL OF A KITCHEN APPLIANCE

ROBOT DE CUISINE ET PROCÉDÉ DE FONCTIONNEMENT D'UN OUTIL D'AGITATION D'UN ROBOT DE CUISINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2019 DE 102019211280**

(43) Veröffentlichungstag der Anmeldung:
**03.02.2021 Patentblatt 2021/05**

(73) Patentinhaber: **BSH Hausgeräte GmbH**
**81739 München (DE)**

(72) Erfinder:
• **Brinovsek, Luka**
**3341 Smartno ob Dreti (SI)**
• **Blischke, Daniela**
**84529 Tittmoning (DE)**

(56) Entgegenhaltungen:
**EP-A1- 2 730 203 WO-A1-2011/142451**
**CN-A- 106 774 518 DE-A1-102010 016 024**

**Beschreibung**

Die Erfindung betrifft eine Küchenmaschine und ein Verfahren zum Betrieb eines Rühr-Werkzeugs einer Küchenmaschine.

Eine Küchenmaschine umfasst einen Behälter, der ein Nahrungsmittel aufnehmen kann, um das Nahrungsmittel innerhalb des Behälters zu verarbeiten. Im Rahmen der Verarbeitung des Nahrungsmittels kann eine Temperierung (insbesondere ein Kühlen oder ein Erhitzen bzw. Aufwärmen) des Inhalts erfolgen. Dabei kann die Temperierung durch Einsatz eines Rühr-Werkzeugs unterstützt werden, z.B. um bei einem Aufwärm-Vorgang ein Anbrennen des Nahrungsmittels zu verhindern.

EP 2 730 203 A1 beschreibt eine Küchenmaschine mit einem Rührgefäß. CN 106 774 518 A beschreibt eine Küchenmaschine zur Alkoholisierung von Nahrungsmitteln. WO 2011 /142451 A1 beschreibt einen Reiskocher. DE 10 2010 016 024 A1 beschreibt eine Küchenmaschine mit einem Rührwerk.

Das vorliegende Dokument befasst sich mit der technischen Aufgabe, eine besonders schonende und effiziente Temperierung eines Nahrungsmittels in einer Küchenmaschine zu ermöglichen.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Küchenmaschine (insbesondere eine Küchenmaschine mit Kochfunktion) beschrieben. Die Küchenmaschine kann ausgebildet sein, um auf eine Arbeitsplatte einer Küche gestellt zu werden. Die Küchenmaschine umfasst einen Behälter zur Aufnahme eines Nahrungsmittels. Der Behälter kann z.B. eine Kapazität von 2 Litern oder mehr, oder von 3 Litern oder mehr aufweisen.

Des Weiteren umfasst die Küchenmaschine eine Temperierungseinheit (insbesondere mit einem Heizelement), die eingerichtet ist, den Behälter von zumindest einer Seite des Behälters her (insbesondere von der Unterseite oder von dem Boden des Behälters her) zu temperieren (insbesondere zu erwärmen oder zu erhitzen). Die Temperierungseinheit kann insbesondere darauf beschränkt sein, den Behälter von genau einer Seite (insbesondere von der Unterseite) her zu temperieren.

Des Weiteren umfasst die Küchenmaschine zumindest einen Temperatursensor (z.B. einen ersten und/oder einen zweiten Temperatursensor), der eingerichtet ist, Temperaturdaten in Bezug auf die Temperatur des Behälters und/oder des Nahrungsmittels zu erfassen. Der Temperatursensor kann einen temperaturabhängigen Messwiderstand und/oder einen Infrarot (IR) Sensor umfassen. Der Temperatursensor kann an der Unterseite und/oder an einer Seitenwand des Behälters angeordnet sein.

Ferner umfasst die Küchenmaschine einen (elektrischen) Motor, der eingerichtet ist, ein Rühr-Werkzeug in dem Behälter anzutreiben, um das Nahrungsmittel umzurühren. Dabei kann das Rühr-Werkzeug in unterschiedlichen Rührmodi betrieben werden. Die unterschiedlichen Rührmodi können unterschiedliche Intensitäten aufweisen. Insbesondere kann dabei das Ausmaß (z.B. die Umwälzrate) verändert werden, mit dem das Nahrungsmittel in dem Behälter umgerührt bzw. umgewälzt wird. Alternativ oder ergänzend können die Kräfte, die auf das Nahrungsmittel einwirken, je nach Intensität des Rührmodus unterschiedlich sein. Typischerweise steigen mit steigender Intensität des Rührmodus die Umwälzrate des Nahrungsmittels und/oder die Kräfte, die auf das Nahrungsmittel einwirken (und damit auch das Risiko von möglichen Beeinträchtigungen des Nahrungsmittels).

Ein Rührmodus weist typischerweise ein oder mehrere Parameter auf, die angepasst werden können, um den Rührmodus anzupassen und/oder um die Intensität des Rührmodus zu verändern. Beispielhafte Parameter sind: die Rührgeschwindigkeit des Rühr-Werkzeugs; die Dauer einer Rührphase, in der das Rühr-Werkzeug betrieben wird; die Dauer einer Unterbrechungsphase, in der das Rühr-Werkzeug stillsteht; und/oder der zeitliche Verlauf der Rührgeschwindigkeit des Rühr-Werkzeugs. In einem Rührmodus können z.B. abwechselnd Rührphasen mit einer bestimmten Dauer auf Unterbrechungsphasen mit einer bestimmten Dauer aufeinander folgen.

Die Intensität des Rührmodus kann z.B. durch eine Erhöhung der Rührgeschwindigkeit erhöht werden. Alternativ oder ergänzend kann die Intensität des Rührmodus durch eine Erhöhung der Dauer einer Rührphase (insbesondere relativ zu der Dauer einer nachfolgenden Unterbrechungsphase) erhöht werden. Alternativ oder ergänzend kann die Intensität des Rührmodus durch eine Reduzierung der Dauer einer Unterbrechungsphase (insbesondere relativ zu einer nachfolgenden Rührphase) erhöht werden.

Die Küchenmaschine kann somit derart ausgelegt sein, dass das Rühr-Werkzeug der Küchenmaschine in unterschiedlichen Rührmodi mit unterschiedlicher Intensität betrieben werden kann. Die unterschiedlichen Rührmodi können dabei durch einen entsprechend unterschiedlichen Betrieb des Motors bewirkt werden.

Des Weiteren umfasst die Küchenmaschine eine Steuereinheit (z.B. mit einem Mikroprozessor), die eingerichtet ist, die Temperierungseinheit zu betreiben, um bei einem Temperierungs-Vorgang das Nahrungsmittel in dem Behälter zu temperieren. Dabei kann die Temperierungseinheit insbesondere betrieben werden, um das Nahrungsmittel und/oder den Behälter auf eine bestimmte Ziel-Temperatur zu temperieren (insbesondere zu erwärmen). Die Ziel-Temperatur kann z.B. auf Basis einer Nutzereingabe an der Benutzerschnittstelle der Küchenmaschine und/oder auf Basis der Rezeptdaten für ein Rezept ermittelt werden, das an der Küchenmaschine ausgeführt wird.

Die Steuereinheit ist ferner eingerichtet, den Rührmodus des Rühr-Werkzeugs während des Temperierungs-Vorgangs in Abhängigkeit von den Temperaturdaten anzupassen. Insbesondere kann die Steuereinheit eingerichtet ist, die Intensität des Rührmodus, mit der das Nahrungsmittel in dem Behälter umgerührt wird, in Abhängigkeit von den Temperaturdaten anzupassen. Zu diesem Zweck können ein oder mehrere Parameter des Rührmodus in Abhängigkeit von den Temperaturdaten angepasst werden.

Durch die Anpassung des Rührmodus während eines Temperierungs-Vorgangs kann in effizienter und schonender Weise ein Nahrungsmittel auf eine bestimmte Ziel-Temperatur temperiert (insbesondere erwärmt) werden. Dabei kann in besonders vorteilhafter Weise die Intensität des Rührmodus reduziert werden, wenn sich die Temperatur des Nahrungsmittels der Ziel-Temperatur nähert.

Insbesondere kann die Steuereinheit eingerichtet sein, in Abhängigkeit von den Temperaturdaten einen vordefinierten Rührmodus aus einer Mehrzahl von unterschiedlichen vordefinierten Rührmodi auszuwählen. Dabei können sich die Mehrzahl von unterschiedlichen vordefinierten Rührmodi in Bezug auf die Intensität des jeweiligen Rührmodus voneinander unterscheiden. Beispielsweise können ein erster vordefinierter Rührmodus und ein zweiter vordefinierter Rührmodus bereitgestellt werden. Dabei kann der erste vordefinierte Rührmodus eine höhere Intensität aufweisen als der zweite vordefinierte Rührmodus. Die Steuereinheit kann dann eingerichtet sein, in Abhängigkeit von den Temperaturdaten den vordefinierten ersten Rührmodus oder den vordefinierten zweiten Rührmodus auszuwählen. So kann in besonders zuverlässiger und effizienter Weise der Rührmodus, insbesondere die Intensität des Rührmodus, angepasst werden, um die Qualität eines Nahrungsmittels zu erhöhen. Insbesondere kann in effizienter und robuster Weise ein Wechsel zwischen vordefinierten Rührmodi erfolgen (ohne dass eine weitere Temperatur-abhängige Anpassung eines Rührmodus erfolgt und/oder erforderlich ist). Die unterschiedlichen Rührmodi können dabei (ggf. nur) eine unterschiedlich lange Dauer der Unterbrechungsphasen aufweisen (andernfalls können die unterschiedlichen Rührmodi ggf. gleich sein).

Die Steuereinheit kann eingerichtet sein, den Rührmodus des Rühr-Werkzeugs während des Temperierungs-Vorgangs auch in Abhängigkeit von der Ziel-Temperatur anzupassen. Insbesondere kann die Steuereinheit eingerichtet ist, auf Basis der Temperaturdaten einen Schätzwert einer Inhalts-Temperatur des Nahrungsmittels in dem Behälter zu ermitteln. Der Schätzwert kann z.B. einer durch die Temperaturdaten angezeigten Temperatur entsprechen (z.B. der durch einen ersten Temperatursensor erfassten ersten Temperatur und/oder der durch einen zweiten Temperatursensor erfassten zweiten Temperatur).

Die Steuereinheit kann ferner eingerichtet sein, eine Abweichung des Schätzwertes der Inhalts-Temperatur von der Ziel-Temperatur zu ermitteln. Der Rührmodus, insbesondere die Intensität des Rührmodus, kann dann in präziser Weise in Abhängigkeit von der Abweichung (insbesondere in Abhängigkeit von dem Betrag der Abweichung) des Schätzwertes der Inhalts-Temperatur von der Ziel-Temperatur angepasst werden.

Dabei kann die Steuereinheit eingerichtet sein, die Intensität des Rührmodus mit steigender Abweichung (insbesondere mit steigendem Betrag der Abweichung) des Schätzwertes der Inhalts-Temperatur von der Ziel-Temperatur zu erhöhen. Alternativ oder ergänzend kann die Steuereinheit eingerichtet sein, die Intensität des Rührmodus mit sinkender Abweichung (insbesondere mit sinkendem Betrag der Abweichung) des Schätzwertes der Inhalts-Temperatur von der Ziel-Temperatur zu reduzieren.

In einem Beispiel kann die Steuereinheit eingerichtet sein, zu bestimmen, ob der Betrag der Abweichung des Schätzwertes der Inhalts-Temperatur von der Ziel-Temperatur größer oder kleiner als ein Abweichungs-Schwellenwert ist. Der Abweichungs-Schwellenwert kann z.B. um 10% oder weniger der Ziel-Temperatur sein. Das Rühr-Werkzeug kann mit einem ersten Rührmodus betrieben werden, wenn bestimmt wurde, dass der Betrag der Abweichung größer als der Abweichungs-Schwellenwert ist. Des Weiteren kann das Rühr-Werkzeug mit einem (unterschiedlichen) zweiten Rührmodus betrieben werden, wenn bestimmt wurde, dass der Betrag der Abweichung kleiner als der Abweichungs-Schwellenwert ist. Dabei weist der erste Rührmodus bevorzugt eine höhere Intensität als der zweite Rührmodus auf.

Durch die Berücksichtigung der Abweichung des Schätzwertes der Inhalts-Temperatur von der Ziel-Temperatur bei der Anpassung des Rührmodus kann ein Nahrungsmittel in besonders energieeffizienter und schonender Weise temperiert werden.

Die Küchenmaschine kann einen ersten Temperatursensor umfassen, der eingerichtet ist, erste Temperaturdaten in Bezug auf eine erste Temperatur an einer ersten Stelle des Behälters und/oder des Nahrungsmittels zu erfassen. Die erste Stelle kann an der Unterseite bzw. an dem Boden des Behälters angeordnet sein. Der erste Temperatursensor kann z.B. einen temperaturabhängigen Messwiderstand umfassen.

Des Weiteren kann die Küchenmaschine einen zweiten Temperatursensor umfassen, der eingerichtet ist, zweite Temperaturdaten in Bezug auf eine zweite Temperatur an einer zweiten Stelle des Behälters und/oder des Nahrungsmittels zu erfassen. Die zweite Stelle kann an einer Seitenwand des Behälters angeordnet sein. Dabei kann die zweite Stelle insbesondere um 5mm oder mehr, oder um 10mm oder mehr von dem Boden und/oder von der Unterseite des Behälters beabstandet sein.

Der zweite Temperatursensor kann einen Infrarot (IR) Sensor umfassen, der auf die zweite Stelle des Behälters gerichtet ist, und der eingerichtet ist, zweite Temperaturdaten in Bezug auf die Intensität von Strahlung im Infrarot-Spektralbereich zu erfassen, die von der zweiten Stelle des Behälters ausgeht.

Es können somit Temperaturdaten in Bezug auf die Temperatur an unterschiedlichen Stellen des Behälters bereitgestellt werden. Insbesondere können dabei die erste Stelle und die zweite Stelle an unterschiedlich orientierten Wänden des Behälters angeordnet sind. Alternativ oder ergänzend können die erste Stelle und die zweite Stelle um 5cm oder mehr voneinander beabstandet sein. Auf Basis der Temperaturdaten der unterschiedlichen Stellen kann auf die Temperatur des Inhalts (insbesondere des Nahrungsmittels) des Behälters in unterschiedlichen Bereichen des Behälters geschlossen werden. Dies ermöglicht es, auf Basis der Temperaturdaten der unterschiedlichen Temperatursensoren einen Grad der Inhomogenität der Temperierung des Nahrungsmittels zu ermitteln. Der Rührmodus, insbesondere die Intensität des Rührmodus, kann dann in Abhängigkeit von dem Grad der Inhomogenität angepasst werden. So können die Effizienz und die Güte eines Temperierungsvorgangs weiter erhöht werden.

Die Steuereinheit kann eingerichtet sein, den Rührmodus des Rühr-Werkzeugs während des Temperierungs-Vorgangs in Abhängigkeit von den ersten Temperaturdaten und in Abhängigkeit von den zweiten Temperaturdaten, insbesondere in Abhängigkeit von der ersten Temperatur und der zweiten Temperatur (z.B. in Abhängigkeit von einer Differenz zwischen der ersten Temperatur und der zweiten Temperatur), anzupassen. So kann ein besonders effizienter und schonender Temperierungs-Vorgang ermöglicht werden.

Die Steuereinheit kann eingerichtet sein, eine Abweichung der zweiten Temperatur von der ersten Temperatur zu ermitteln. Der Rührmodus, insbesondere die Intensität des Rührmodus, kann dann in Abhängigkeit von der Abweichung (insbesondere von dem Betrag der Abweichung) der zweiten Temperatur von der ersten Temperatur angepasst werden. Dabei kann die Intensität des Rührmodus mit steigender Abweichung (insbesondere mit steigendem Betrag der Abweichung) der zweiten Temperatur von der ersten Temperatur erhöht werden. Alternativ oder ergänzend kann die Intensität des Rührmodus mit sinkender Abweichung (insbesondere mit sinkendem Betrag der Abweichung) der zweiten Temperatur von der ersten Temperatur reduziert werden. So kann ein besonders vorteilhafter Kompromiss zwischen Effizienz, Beeinträchtigung des Nahrungsmittels und Homogenität der Temperierung bewirkt werden.

Die Steuereinheit kann eingerichtet sein, Inhaltsinformation in Bezug auf das Nahrungsmittel zu ermitteln, das sich in dem Behälter befindet. Die Inhaltsinformation kann z.B. den Grad der Empfindlichkeit des Nahrungsmittels in Bezug auf das Umrühren des Nahrungsmittels anzeigen. Alternativ oder ergänzend kann die Inhaltsinformation die Viskosität des Nahrungsmittels anzeigen. Alternativ oder ergänzend kann die Inhaltsinformation den Typ des Nahrungsmittels (z.B. Flüssigkeit oder feste Substanz) anzeigen.

Die Steuereinheit kann eingerichtet sein, die Inhaltsinformation in Bezug auf das Nahrungsmittel auf Basis von Rezeptdaten eines Rezeptes zu ermitteln, das auf der Küchenmaschine ausgeführt wird. Alternativ oder ergänzend kann die Inhaltsinformation auf Basis einer Nutzereingabe an der Benutzerschnittstelle des Küchengeräts ermittelt werden.

Des Weiteren kann die Steuereinheit eingerichtet sein, den Rührmodus, insbesondere die Intensität des Rührmodus, in Abhängigkeit von der Inhaltsinformation einzustellen und/oder anzupassen. So kann die Qualität eines Temperierungsvorgangs weiter erhöht werden.

Gemäß einem weiteren Aspekt wird ein Verfahren zum Betrieb eines Rühr-Werkzeugs einer Küchenmaschine beschrieben. Die Küchenmaschine umfasst einen Behälter zur Aufnahme eines Nahrungsmittels. Des Weiteren umfasst die Küchenmaschine eine Temperierungseinheit, die eingerichtet ist, den Behälter zu temperieren. Das Verfahren umfasst das Betreiben der Temperierungseinheit, um bei einem Temperierungs-Vorgang das Nahrungsmittel in dem Behälter (auf eine bestimmte Ziel-Temperatur) zu temperieren. Dabei kann im Rahmen des Temperierungs-Vorgangs ggf. eine Temperaturveränderung von 20°K oder mehr, oder von 50°K oder mehr erfolgen. Des Weiteren umfasst das Verfahren das Ermitteln von Temperaturdaten in Bezug auf die Temperatur des Behälters und/oder des Nahrungsmittels während des Temperierungs-Vorgangs. Das Verfahren umfasst ferner das Anpassen des Rührmodus des Rühr-Werkzeugs während des Temperierungs-Vorgangs in Abhängigkeit von den Temperaturdaten. Dabei kann der Rührmodus, insbesondere die Intensität der Rührmodus, zumindest einmal während des Temperierungs-Vorgangs angepasst bzw. verändert werden. Ein Rührmodus kann dabei eine Abfolge von Rührphasen und Unterbrechungsphasen aufweisen. Eine Änderung des Rührmodus kann eine Änderung der Abfolge von Rührphasen und Unterbrechungsphasen umfassen.

Es ist zu beachten, dass jegliche Aspekte des in diesem Dokument beschriebenen Verfahrens und/oder der beschriebenen Küchenmaschine in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen

Figur 1a ein Blockdiagramm einer beispielhaften Küchenmaschine;

Figur 1b eine Küchenmaschine in einer perspektivischen Ansicht;

Figur 1c die Basis einer Küchenmaschine ohne Behälter;

Figur 2 eine beispielhafte Vorrichtung zur Temperierung eines Nahrungsmittels;

Figuren 3a und 3b beispielhafte Temperaturverläufe bei einem Aufwärm-Vorgang; und

Figur 4 ein Ablaufdiagramm eines beispielhaften Verfahrens zum Betrieb eines Rühr-Werkzeugs einer Küchenmaschine bei einem Temperierungs-Vorgang.

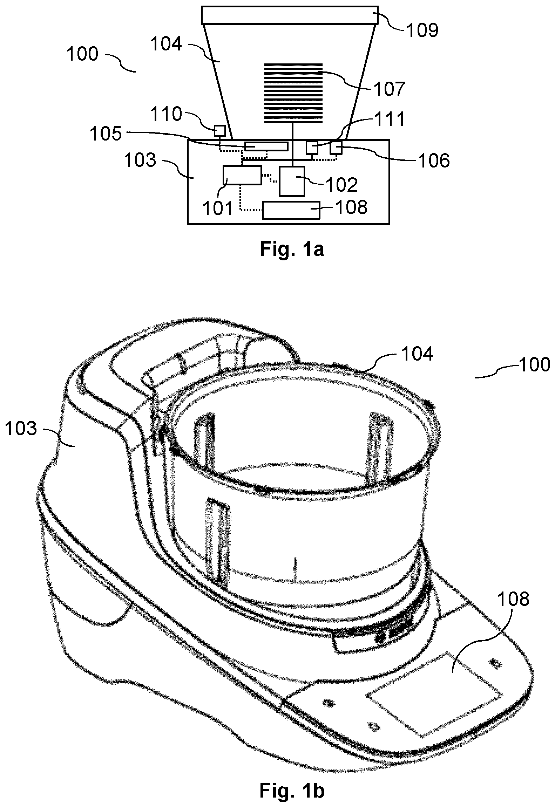

Wie eingangs dargelegt, befasst sich das vorliegende Dokument damit, eine effiziente und schonende Temperierung eines Nahrungsmittels in einer Küchenmaschine zu ermöglichen. In diesem Zusammenhang zeigt Fig. 1a eine beispielhafte Küchenmaschine 100. Die in Fig. 1a dargestellte Küchenmaschine 100 umfasst einen Behälter 104, der auf einer Basis 103 der Küchenmaschine 100 angeordnet ist und in dem Zutaten für ein herzustellendes Nahrungsmittel verarbeitet werden können, z.B. mittels eines Werkzeugs bzw. Einsatzes 107, das bzw. der ggf. durch einen Motor 102 angetrieben wird. Dabei können ggf. unterschiedliche Werkzeuge 107 (z.B. ein Messer, ein Knethaken oder ein Besen oder ein Rühr-Werkzeug) an dem Motor 102 montiert werden. Die Küchenmaschine 100 kann eingerichtet sein, den Behälter 104 mittels einer Temperierungseinheit 105 (z.B. einer Kühleinheit oder einer Heizeinheit) zu temperieren, z.B. zu kühlen (Kühleinheit) oder zu erwärmen (Heizeinheit).

Des Weiteren kann die Küchenmaschine 100 ein oder mehrere Sensoren 106, 111 umfassen, die eingerichtet sind, Sensordaten in Bezug auf die Küchenmaschine 100 (insbesondere in Bezug auf einen Zustand der Küchenmaschine 100) und/oder in Bezug auf das herzustellende Nahrungsmittel zu erfassen. Ein beispielhafter Sensor ist ein Basis-Temperatursensor 111, der eingerichtet ist, Temperaturdaten in Bezug auf die Temperatur des Behälters 104 und/oder des darin enthaltenen Nahrungsmittels zu erfassen. Der Basis-Temperatursensor 111 kann einen temperaturabhängigen Messwiderstand umfassen. Ein weiterer beispielhafter Sensor 106 ist ein Gewichtssensor bzw. eine Waage, der bzw. die eingerichtet ist, Gewichtsdaten in Bezug auf das Gewicht des Behälters 104 und/oder des darin enthaltenen Nahrungsmittels zu erfassen.

Außerdem kann die Küchenmaschine 100 eine Benutzerschnittstelle 108 umfassen, die es einem Nutzer ermöglicht, Steuereingaben an die Küchenmaschine 100 zu tätigen (z.B. über ein oder mehrere Knöpfe bzw. Bedienelemente), und/oder die es der Küchenmaschine 100 ermöglicht, Rückmeldungen an einen Nutzer der Küchenmaschine 100 auszugeben (z.B. über einen Bildschirm und/oder über eine Anzeige). Insbesondere kann die Benutzerschnittstelle 108 dazu genutzt werden, Information in Bezug auf Arbeitsschritte eines Rezeptes zur Herstellung eines bestimmten Nahrungsmittels an einen Nutzer auszugeben.

Des Weiteren umfasst die Küchenmaschine 100 eine Steuereinheit 101, die eingerichtet sein kann, Rezeptdaten für ein Rezept zur Herstellung eines bestimmten Nahrungsmittels zu ermitteln (z.B. aus einer Speichereinheit der Küchenmaschine 100 auszulesen oder von einer Datenbank herunterzuladen). Ferner kann die Steuereinheit 101 eingerichtet sein, die Küchenmaschine 100 zumindest teilweise automatisch in Abhängigkeit von den Rezeptdaten zu betreiben, um den Nutzer bei der Herstellung des bestimmten Nahrungsmittels zu unterstützen.

Die Küchenmaschine 100 kann einen Deckel 109 zum Abdecken des Behälters 104 aufweisen. Dabei kann der Deckel 109 ggf. mittels einer Riegelvorrichtung (nicht dargestellt) verriegelt werden, um bei Bedarf den Zugang zu dem Behälter 104 zu unterbinden.

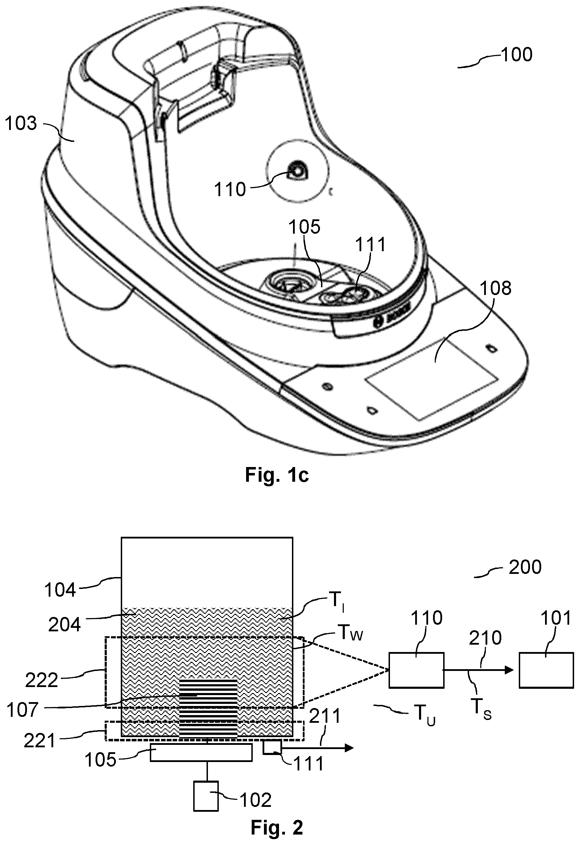

Fig. 1b zeigt eine beispielhafte Küchenmaschine 100 in einer perspektivischen Ansicht. Fig. 1c zeigt die Basis 103 einer beispielhaften Küchenmaschine 100 ohne Behälter 104.

Die Küchenmaschine 100 kann einen Infrarot (IR)-Sensor 110 (als weiteren Temperatursensor) umfassen, der eingerichtet ist, Sensordaten (d.h. Temperaturdaten) in Bezug auf die Oberfläche bzw. die Seitenwand des Behälters 104 zu erfassen. Der IR-Sensor 110 kann innerhalb der Basis 103 der Küchenmaschine 100 angeordnet und auf den Ort des (entnehmbaren) Behälters 104 gerichtet sein. Dabei kann der IR-Sensor 110 in einer bestimmten Höhe (z.B. 10mm oder mehr, oder 15mm oder mehr) vom Boden an der Seite des Behälters 104 angeordnet sein. Der IR-Sensor 110 ist eingerichtet, die von einer Oberfläche abgestrahlte (elektromagnetische) Strahlung im Infrarot-Bereich zu erfassen. Insbesondere kann dabei die Intensität der Strahlung erfasst werden. Auf Basis der erfassten Intensität der Strahlung kann auf die Temperatur der Oberfläche bzw. der Wand des Behälters 104 geschlossen werden.

Fig. 2 zeigt eine Vorrichtung 200, z.B. einen Ausschnitt der Küchenmaschine 100, mit dem Behälter 104 und dem außerhalb des Behälters 104 angeordneten IR-Sensors 110. Der IR-Sensor 110 ist eingerichtet, Sensordaten 210 in Bezug auf die Temperatur des Behälters 104 und/oder des in dem Behälter 104 angeordneten Inhalts 204 zu erfassen. Der Inhalt 204 in dem Behälter 104 weist eine Inhalts-Temperatur $T_I$ auf, die Wand des Behälters 104 weist eine Wand-Temperatur Tw auf und das Umfeld um den Behälter 104 weist eine Umfeld-Temperatur Tu auf. Die durch die Sensordaten 210 angezeigte Sensor-Temperatur Ts hängt typischerweise von der Inhalts-Temperatur $T_I$, der Wand-Temperatur Tw und/oder der Umfeld-Temperatur Tu ab. Andererseits kann z.B. die Wand-Temperatur Tw auf Basis der durch die Sensordaten 210 angezeigten Sensor-Temperatur Ts und der Umfeld-Temperatur Tu ermittelt werden, z.B. unter Verwendung des Stefan-Boltzmann-Gesetzes durch die Gleichung

$$T_{target\,surface} = \sqrt[4]{\frac{T_{raw\,sensor}^4 - (1-\varepsilon) \cdot T_{ambient}^4}{\varepsilon}}$$

wobei $T_{target\,surface}$ die Wand-Temperatur Tw ist, wobei $T_{raw\,sensor}$ die Sensor-Temperatur Ts ist, wobei $T_{ambient}$ die Umfeld-Temperatur Tu ist, und wobei $\varepsilon$ der Emissionsgrad der Wand des Behälters 104 ist. Durch eine Anpassung (insbesondere durch eine Reduzierung) des Emissionsgrads $\varepsilon$ kann es ermöglicht werden, durch Verwendung der o.g. Gleichung auf Basis der durch die Sensordaten 210 angezeigten Sensor-Temperatur Ts in präziser Weise die Inhalts-Temperatur $T_I$ des Inhalts 204 des Behälters 104 zu schätzen.

Fig. 2 zeigt ferner den Basis-Temperatursensor 111, der z.B. an der Basis 103 der Küchenmaschine 100 unterhalb des Behälters 104 angeordnet ist. Der Basis-Temperatursensor 110 kann einen temperaturabhängigen ohmschen Widerstand umfassen. Der Basis-Temperatursensor 111 ist eingerichtet, Temperaturdaten 211 (d.h. Sensordaten) in Bezug auf die Temperatur des Behälters 104 zu erfassen.

Die Vorrichtung 200 kann somit ggf. zwei unterschiedliche Temperatursensoren 110, 111 umfassen, die an unterschiedlichen Stellen angeordnet sind. Insbesondere kann die Vorrichtung 200 einen ersten Temperatursensor 111 (z.B. den Basis-Temperatursensor) umfassen, der eingerichtet ist, an einer ersten Stelle des Behälters 104 (z.B. am Boden des Behälters 104) erste Temperaturdaten zu erfassen. Die ersten Temperaturdaten zeigen eine erste Temperatur an der ersten Stelle des Behälters 104 an. Des Weiteren kann die Vorrichtung 200 einen zweiten Temperatursensor 110 (z.B. den IR-Sensor) umfassen, der eingerichtet ist, an einer zweiten Stelle des Behälters 104 (z.B. an einer Seitenwand des Behälters 104) zweite Temperaturdaten zu erfassen. Die zweiten Temperaturdaten zeigen eine zweite Temperatur an der zweiten Stelle des Behälters 104 an. Die zweite Temperatur kann z.B. die Wand-Temperatur Tw oder ein Schätzwert der Inhalts-Temperatur $T_I$ des Inhalts 204 des Behälters 104 sein.

Die an der ersten Stelle erfasste erste Temperatur $T_1$ ist ein Indikator der Temperatur des Inhalts 204 des Behälters 104 in einem ersten Bereich 221 (z.B. am Boden des Behälters 104). In entsprechender Weise ist die an der zweiten Stelle erfasste zweite Temperatur $T_2$ ein Indikator der Temperatur des Inhalts 204 des Behälters 104 in einem zweiten Bereich 222 (z.B. in einer Höhe zwischen 5mm und 30mm innerhalb der Behälters 104).

Des Weiteren umfasst die Vorrichtung 200 ein Werkzeug 107, insbesondere ein Rühr-Werkzeug, das durch den Motor 102 angetrieben werden kann. Das Rühr-Werkzeug 107 kann während eines Temperierungs-Vorgangs, insbesondere während eines Aufwärm-Vorgangs, des Inhalts 204 des Behälters 104 verwendet werden, um eine möglichst gleichmäßige Temperierung des Inhalts 204 auf eine bestimmte Ziel-Temperatur zu ermöglichen. Andererseits kann der Betrieb des Rühr-Werkzeugs 107 zu einer Beeinträchtigung des Inhalts 204 des Behälters 104 führen. Ferner führt der Betrieb des Rühr-Werkzeugs 107 zu einem erhöhten Energieverbrauch der Vorrichtung 200.

Die Steuereinheit 101 kann eingerichtet sein, das Rühr-Werkzeug 107 in unterschiedlichen Rührmodi zu betreiben. Dabei können sich die unterschiedlichen Rührmodi in Bezug auf ein oder mehrere Parameter unterscheiden. Beispielhafte Parameter für einen Rührmodus sind:

- die Rührgeschwindigkeit des Rühr-Werkzeugs 107;
- die Dauer einer Rührphase, in der das Rühr-Werkzeug 107 betrieben wird;
- die Dauer einer Unterbrechungsphase, in der das Rühr-Werkzeug 107 nicht betrieben wird;
- die Anzahl von abwechselnden Rührphasen und Unterbrechungsphasen; und
- den zeitlichen Verlauf der Rührgeschwindigkeit.

In einem beispielhaften Rührmodus können Rührphasen und Unterbrechungsphasen abgewechselt werden. Dabei kann durch die Dauer der Unterbrechungsphasen und/oder der Rührphasen die Intensität des Rührmodus variiert werden. Beispielsweise kann ein relativ intensiver Rührmodus relativ kurze Unterbrechungsphasen zwischen zwei Rührphasen aufweisen, während ein relativ wenig intensiver Rührmodus relativ lange Unterbrechungsphasen zwischen zwei Rührphasen aufweisen. Die Rührphasen können z.B. eine Dauer von 5 Sekunden aufweisen. Des Weiteren können die Unterbrechungsphasen bei einem intensiven Rührmodus ebenfalls eine Dauer von 5 Sekunden aufweisen, und in einem wenig intensiven Rührmodus eine Dauer von 20 Sekunden aufweisen.

Die Steuereinheit 101 kann eingerichtet sein, während eines Temperierungs-Vorgangs den Rührmodus des Rühr-Werkzeugs 107 anzupassen, insbesondere um einerseits eine möglichst gleichmäßige Temperierung zu bewirken, und um andererseits die Beeinträchtigung des Inhalts 204 und den Energieverbrauch zu reduzieren. Der Rührmodus kann dabei vorteilhaft in Abhängigkeit von den Temperaturdaten 210, 211 angepasst werden.

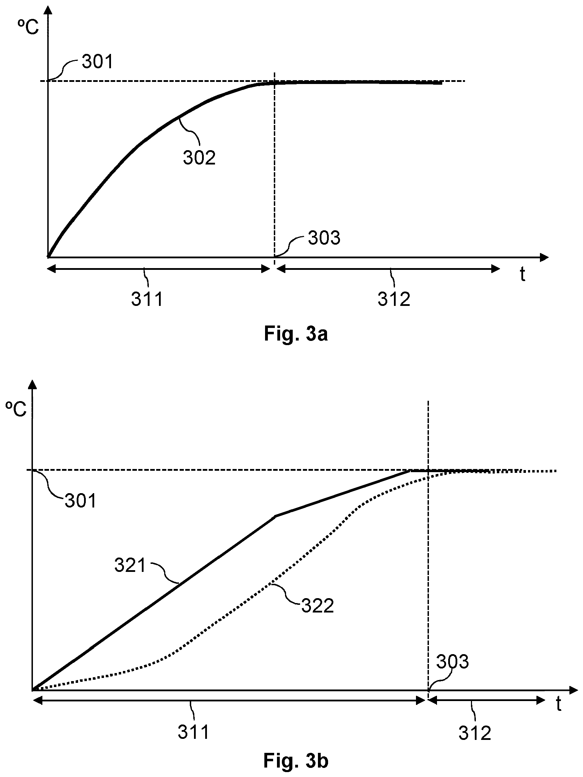

Fig. 3a zeigt einen beispielhaften zeitlichen Verlauf eines Schätzwertes der Temperatur 302 des Inhalts 204 des Behälters 104. Der Schätzwert der Temperatur 302 des Inhalts 204 des Behälters 104 kann auf Basis der ersten Temperaturdaten 211 und/oder der zweiten Temperaturdaten 210 ermittelt werden. Des Weiteren zeigt Fig. 3a die Ziel-Temperatur 301, auf die der Inhalt 204 temperiert werden soll. Der Rührmodus kann in Abhängigkeit von der Differenz bzw. der Abweichung zwischen dem Schätzwert der Inhalts-Temperatur 302 und der Ziel-Temperatur 311 angepasst werden. Insbesondere kann die Intensität des Rührmodus mit sinkender Differenz bzw. Abweichung reduziert werden. In dem in Fig. 3a dargestellten Beispiel wird das Rühr-Werkzeug 107 in einer ersten Phase 311 des Temperierungs-Vorgangs, in der der Schätzwert der Inhalts-Temperatur 302 relativ stark von der Ziel-Temperatur 311 abweicht, mit einem relativ intensiven Rührmodus betrieben.

An dem Zeitpunkt 303 erreicht oder unterschreitet der Betrag der Differenz zwischen dem Schätzwert der Inhalts-Temperatur 302 und der Ziel-Temperatur 311 einen vordefinierten Differenz-Schwellenwert. Als Folge daraus wird das Rühr-Werkzeug 107 in einer zweiten Phase 312 des Temperierungs-Vorgangs mit einem relativ wenig intensiven Rührmodus (d.h. mit einem Rührmodus mit reduzierter Intensität) betrieben. So kann ein vorteilhafter Kompromiss zwischen dem Bewirken einer gleichmäßigen Temperierung des Inhalts 204 einerseits und der Reduzierung der Beeinträchtigung des Inhalts 204 und der Reduzierung des Energieverbrauchs andererseits bereitgestellt werden.

Wie oben dargestellt, kann die Vorrichtung 200 zwei oder mehr Temperatursensoren 110, 111 aufweisen, die eingerichtet sind, Temperaturdaten 210, 211 in Bezug auf unterschiedliche Bereiche 221, 222 des Behälters 104 bzw. des Inhalts 204 in dem Behälter 104 bereitzustellen. Die unterschiedlichen Bereiche 221, 222 können unterschiedlichen Schichten des Inhalts 204 entsprechen. Dabei kann der ersten Bereich 221 relativ nah an der Temperierungseinheit 105 angeordnet sein, so dass dem Inhalt 204 in dem ersten Bereich 221 relativ viel und/oder relativ schnell thermische Energie zugeführt (bei einem Aufwärm-Vorgang) oder entzogen (bei einem Abkühl-Vorgang) wird. Der zweite Bereich 222 kann relativ weit von der Temperierungseinheit 105 weg angeordnet sein, so dass dem Inhalt 204 in dem zweiten Bereich 222 relativ wenig und/oder relativ langsam thermische Energie zugeführt (bei einem Aufwärm-Vorgang) oder entzogen (bei einem Abkühl-Vorgang) wird. Als Folge daraus kann eine inhomogene Temperaturverteilung der Temperatur des Inhalts 204 des Behälters 104 bewirkt werden.

Die Steuereinheit 101 kann eingerichtet sein, auf Basis der ersten Temperaturdaten 211 und auf Basis der zweiten Temperaturdaten 210 einen Grad der Inhomogenität der Inhalts-Temperatur des Inhalts 204 des Behälters 104 zu ermitteln. Der Rührmodus kann dann in Abhängigkeit von dem Grad der Inhomogenität der Inhalts-Temperatur des Inhalts 204 des Behälters 104 angepasst werden. Dabei kann mit steigendem Grad der Inhomogenität die Intensität des Rührmodus erhöht werden (und umgekehrt). So kann die Temperierung des Inhalts 204 des Behälters 104 weiter verbessert werden.

Fig. 3b zeigt einen beispielhaften zeitlichen Verlauf der durch die ersten Temperaturdaten 211 angezeigten ersten Temperatur 321 (die z.B. die Temperatur des Inhalts 204 in dem ersten Bereich 221 anzeigt). Des Weiteren zeigt Fig. 3b einen beispielhaften zeitlichen Verlauf der durch die zweiten Temperaturdaten 210 angezeigten zweiten Temperatur 322 (die z.B. die Temperatur des Inhalts 204 in dem zweiten Bereich 222 anzeigt). Die Differenz bzw. Abweichung zwischen der ersten Temperatur 321 und der zweiten Temperatur 322 kann als Indiz für den Grad der Inhomogenität der Temperaturverteilung des Inhalts 204 betrachtet werden. Insbesondere kann die Steuereinheit 101 eingerichtet sein, den Rührmodus in Abhängigkeit von der Differenz zwischen der ersten Temperatur 321 und der zweiten Temperatur 322 anzupassen. Dabei kann die Intensität des Rührmodus erhöht werden, wenn die Differenz (betraglich) relativ hoch ist. Andererseits kann die Intensität des Rührmodus reduziert werden, wenn die Differenz (betraglich) relativ niedrig ist. So kann die Temperierung eines Nahrungsmittels weiter verbessert werden.

Die Steuereinheit 101 kann eingerichtet sein, Inhaltsinformation in Bezug auf den Inhalt 204 zu ermitteln. Beispielhafte Inhaltsinformation ist

- der Typ des Inhalts 204 (insbesondere des Nahrungsmittels); und/oder
- die Viskosität des Inhalts 204.

Die Inhaltsinformation kann z.B. auf Basis einer Nutzereingabe über die Benutzerschnittstelle 108 und/oder auf Basis der Rezeptdaten eines Rezeptes ermittelt werden, das auf einer Küchenmaschine 100 ausgeführt wird.

Der Rührmodus kann dann in Abhängigkeit von der Inhaltsinformation angepasst werden. Beispielsweise kann die Intensität des Rührmodus mit steigender Viskosität des Inhalts 204 erhöht werden. So kann die Temperierung des Inhalts 204 weiter verbessert werden.

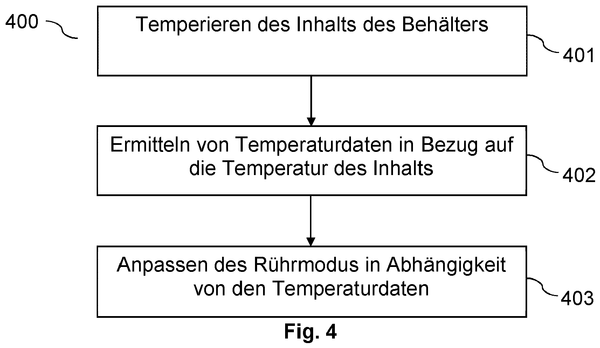

Fig. 4 zeigt ein Ablaufdiagramm eines beispielhaften Verfahrens 400 zum Betrieb eines Rühr-Werkzeugs 107 einer Küchenmaschine 100. Das Verfahren 400 kann durch eine Steuereinheit 101 der Küchenmaschine 100 ausgeführt werden. Die Küchenmaschine 100 umfasst einen Behälter 104 zur Aufnahme eines Nahrungsmittels 204. Des Weiteren umfasst die Küchenmaschine 100 eine Temperierungseinheit 105 (insbesondere eine Heizeinheit bzw. ein Heizelement), die eingerichtet ist, den Behälter 104 zu temperieren (insbesondere zu erwärmen bzw. zu erhitzen).

Das Verfahren 400 umfasst das Betreiben 401 der Temperierungseinheit 105, um bei einem Temperierungs-Vorgang das Nahrungsmittel 204 in dem Behälter 104 zu temperieren. Dabei kann es Ziel des Temperierungs-Vorgangs sein, das Nahrungsmittel 204 auf eine Ziel-Temperatur 301 zu temperieren (insbesondere zu erwärmen).

Des Weiteren umfasst das Verfahren 400 das Ermitteln 402 von Temperaturdaten 210, 211 in Bezug auf die Temperatur des Behälters 104 und/oder des Nahrungsmittels 204 während des Temperierungs-Vorgangs. Dabei kann auf Basis der Temperaturdaten 210, 211 ein Schätzwert der Inhalts-Temperatur 302 des Nahrungsmittels 204 ermittelt werden.

Außerdem umfasst das Verfahren 400 das Anpassen 403 des Rührmodus, insbesondere der Intensität des Rührmodus, des Rühr-Werkzeugs 107 während des TemperierungsVorgangs in Abhängigkeit von den Temperaturdaten 210, 211, insbesondere in Abhängigkeit von dem Schätzwert der Inhalts-Temperatur 302 des Nahrungsmittels 204. So kann in effizienter und schonender Weise eine homogene Temperierung des Nahrungsmittels 204 bewirkt werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Küchenmaschine und/oder des vorgeschlagenen Verfahrens veranschaulichen sollen.

**Patentansprüche**

1. Küchenmaschine (100); wobei die Küchenmaschine (100) umfasst,

   - einen Behälter (104) zur Aufnahme eines Nahrungsmittels (204);
   - eine Temperierungseinheit (105), die eingerichtet ist, den Behälter (104) zu temperieren;
   - zumindest einen Temperatursensor (110, 111), der eingerichtet ist, Temperaturdaten (210, 211) in Bezug auf eine Temperatur des Behälters (104) und/oder des Nahrungsmittels (204) zu erfassen;
   - einen Motor (102), der eingerichtet ist, ein Rühr-Werkzeug (107) in dem Behälter (104) anzutreiben, um das Nahrungsmittel (204) umzurühren; und
   - eine Steuereinheit (101), die eingerichtet ist,

      - die Temperierungseinheit (105) zu betreiben, um bei einem Temperierungs-Vorgang das Nahrungsmittel (204) in dem Behälter (104) auf eine Ziel-Temperatur (301) zu temperieren;
      - auf Basis der Temperaturdaten (210, 211) einen Schätzwert einer Inhalts-Temperatur (302) des Nahrungsmittels (204) in dem Behälter (104) zu ermitteln;
      - eine Abweichung des Schätzwertes der Inhalts-Temperatur (302) von der Ziel-Temperatur (301) zu ermitteln; und
      - einen Rührmodus des Rühr-Werkzeugs (107) während des Temperierungs-Vorgangs in Abhängigkeit von der Abweichung des Schätzwertes der Inhalts-Temperatur (302) von der Ziel-Temperatur (301) anzupassen.

2. Küchenmaschine (100) gemäß Anspruch 1, wobei die Steuereinheit (101) eingerichtet ist, eine Intensität des Rührmodus, mit der das Nahrungsmittel (204) in dem Behälter (104) umgerührt wird, in Abhängigkeit von der Abweichung des Schätzwertes der Inhalts-Temperatur (302) von der Ziel-Temperatur (301) anzupassen.

3. Küchenmaschine (100) gemäß einem der vorhergehenden Ansprüche, wobei

   - der Rührmodus durch Änderung von ein oder mehreren Parametern angepasst werden kann;
   - die ein oder mehreren Parameter umfassen,

      - eine Rührgeschwindigkeit des Rühr-Werkzeugs (107);
      - eine Dauer einer Rührphase, in der das Rühr-Werkzeug (107) betrieben wird;
      - eine Dauer einer Unterbrechungsphase, in der das Rühr-Werkzeug (107) stillsteht; und/oder
      - einen zeitlichen Verlauf der Rührgeschwindigkeit des Rühr-Werkzeugs (107); und

   - die Steuereinheit (101) eingerichtet ist, zumindest einen Parameter in Abhängigkeit von den Temperaturdaten (210, 211) anzupassen.

4. Küchenmaschine (100) gemäß Anspruch 3, wobei eine Intensität des Rührmodus erhöht wird,

   - durch eine Erhöhung der Rührgeschwindigkeit;
   - durch eine Erhöhung der Dauer einer Rührphase, insbesondere relativ zu der Dauer einer nachfolgenden Unterbrechungsphase; und/oder
   - durch eine Reduzierung der Dauer einer Unterbrechungsphase, insbesondere relativ zu einer nachfolgenden Rührphase.

5. Küchenmaschine (100) gemäß einem der vorhergehenden Ansprüche, wobei

- die Steuereinheit (101) eingerichtet ist, in Abhängigkeit von den Temperaturdaten (210, 211) einen vordefinierten Rührmodus aus einer Mehrzahl von unterschiedlichen vordefinierten Rührmodi auszuwählen; und
- sich die Mehrzahl von unterschiedlichen vordefinierten Rührmodi insbesondere in Bezug auf eine Intensität voneinander unterscheiden.

6. Küchenmaschine (100) gemäß einem der vorhergehenden Ansprüche, wobei die Steuereinheit (101) eingerichtet ist,

- die Intensität des Rührmodus mit steigender Abweichung des Schätzwertes der Inhalts-Temperatur (302) von der Ziel-Temperatur (301) zu erhöhen; und/oder
- die Intensität des Rührmodus mit sinkender Abweichung des Schätzwertes der Inhalts-Temperatur (302) von der Ziel-Temperatur (301) zu reduzieren.

7. Küchenmaschine (100) gemäß einem der vorhergehenden Ansprüche, wobei die Steuereinheit (101) eingerichtet ist,

- zu bestimmen, ob ein Betrag der Abweichung des Schätzwertes der Inhalts-Temperatur (302) von der Ziel-Temperatur (301) größer oder kleiner als ein Abweichungs-Schwellenwert ist;
- das Rühr-Werkzeug (107) mit einem ersten Rührmodus zu betreiben, wenn bestimmt wurde, dass der Betrag der Abweichung größer als der Abweichungs-Schwellenwert ist; und
- das Rühr-Werkzeug (107) mit einem zweiten Rührmodus zu betreiben, wenn bestimmt wurde, dass der Betrag der Abweichung kleiner als der Abweichungs-Schwellenwert ist; wobei der erste Rührmodus und der zweite Rührmodus unterschiedlich sind; und wobei insbesondere der erste Rührmodus eine höhere Intensität als der zweite Rührmodus aufweist.

8. Küchenmaschine (100) gemäß einem der vorhergehenden Ansprüche, wobei

- die Küchenmaschine (100) einen ersten Temperatursensor (111) umfasst, der eingerichtet ist, erste Temperaturdaten (211) in Bezug auf eine erste Temperatur (321) an einer ersten Stelle des Behälters (104) und/oder des Nahrungsmittels (204) zu erfassen;
- die Küchenmaschine (100) einen zweiten Temperatursensor (110) umfasst, der eingerichtet ist, zweite Temperaturdaten (210) in Bezug auf eine zweite Temperatur (322) an einer zweiten Stelle des Behälters (104) und/oder des Nahrungsmittels (204) zu erfassen; und
- die Steuereinheit (101) eingerichtet ist, den Rührmodus des Rühr-Werkzeugs (107) während des Temperierungs-Vorgangs in Abhängigkeit von den ersten Temperaturdaten (211) und in Abhängigkeit von den zweiten Temperaturdaten (210), insbesondere in Abhängigkeit von der ersten Temperatur (321) und der zweiten Temperatur (322), anzupassen.

9. Küchenmaschine (100) gemäß Anspruch 8, wobei

- die Temperierungseinheit (105) eingerichtet ist, eine Unterseite des Behälters (104) zu temperieren; und
- die erste Stelle an der Unterseite des Behälters (104) angeordnet ist; und
- die zweite Stelle an einer Seitenwand des Behälters (104) angeordnet ist; wobei die zweite Stelle insbesondere um 5mm oder mehr, oder um 10mm oder mehr von einem Boden und/oder von der Unterseite des Behälters (104) beabstandet ist.

10. Küchenmaschine (100) gemäß einem der Ansprüche 8 bis 9, wobei die Steuereinheit (101) eingerichtet ist,

- eine Abweichung der zweiten Temperatur (322) von der ersten Temperatur (321) zu ermitteln; und
- den Rührmodus, insbesondere eine Intensität des Rührmodus, in Abhängigkeit von der Abweichung der zweiten Temperatur (322) von der ersten Temperatur (321) anzupassen.

11. Küchenmaschine (100) gemäß Anspruch 10, wobei die Steuereinheit (101) eingerichtet ist,

- die Intensität des Rührmodus mit steigender Abweichung der zweiten Temperatur (322) von der ersten Temperatur (321) zu erhöhen; und/oder
- die Intensität des Rührmodus mit sinkender Abweichung der zweiten Temperatur (322) von der ersten Temperatur (321) zu reduzieren.

**12.** Küchenmaschine (100) gemäß einem der vorhergehenden Ansprüche, wobei die Steuereinheit (101) eingerichtet ist,

- Inhaltsinformation in Bezug auf das Nahrungsmittel (204) zu ermitteln, das sich in dem Behälter (104) befindet; und
- den Rührmodus in Abhängigkeit von der Inhaltsinformation zu ermitteln.

**13.** Küchenmaschine (100) gemäß Anspruch 12, wobei

- die Steuereinheit (101) eingerichtet ist, die Inhaltsinformation in Bezug auf das Nahrungsmittel (204) auf Basis von Rezeptdaten eines Rezeptes zu ermitteln, das auf der Küchenmaschine (100) ausgeführt wird; und/oder
- die Inhaltsinformation

- einen Grad der Empfindlichkeit des Nahrungsmittels (204) in Bezug auf Umrühren anzeigt; und/oder
- eine Viskosität des Nahrungsmittels (204) anzeigt; und/oder
- einen Typ des Nahrungsmittels (204) anzeigt.

**14.** Verfahren (400) zum Betrieb eines Rühr-Werkzeugs (107) einer Küchenmaschine (100); wobei die Küchenmaschine (100) einen Behälter (104) zur Aufnahme eines Nahrungsmittels (204) umfasst; wobei die Küchenmaschine (100) eine Temperierungseinheit (105) umfasst, die eingerichtet ist, den Behälter (104) zu temperieren; wobei das Verfahren (400) umfasst,

- Betreiben (401) der Temperierungseinheit (105), um bei einem Temperierungs-Vorgang das Nahrungsmittel (204) in dem Behälter (104) auf eine Ziel-Temperatur (301) zu temperieren;
- Ermitteln (402) von Temperaturdaten (210, 211) in Bezug auf eine Temperatur des Behälters (104) und/oder des Nahrungsmittels (204) während des TemperierungsVorgangs;
- Ermitteln, auf Basis der Temperaturdaten (210, 211), eines Schätzwerts einer Inhalts-Temperatur (302) des Nahrungsmittels (204) in dem Behälter (104);
- Ermitteln einer Abweichung des Schätzwertes der Inhalts-Temperatur (302) von der Ziel-Temperatur (301); und
- Anpassen (403) eines Rührmodus des Rühr-Werkzeugs (107) während des Temperierungs-Vorgangs in Abhängigkeit von der Abweichung des Schätzwertes der Inhalts-Temperatur (302) von der Ziel-Temperatur (301).

**Claims**

**1.** Kitchen appliance (100); wherein the kitchen appliance (100) comprises,

- a container (104) for holding a foodstuff (204);
- a temperature adjustment unit (105), which is designed to adjust the temperature of the container (104);
- at least one temperature sensor (110, 111), which is designed to capture temperature data (210, 211) in respect of a temperature of the container (104) and/or of the foodstuff (204);
- a motor (102), which is designed to drive a mixing tool (107) in the container (104), in order to mix the foodstuff (204); and
- a control unit (101), which is designed

- to operate the temperature adjustment unit (105), in order during a temperature adjustment operation to adjust the temperature of the foodstuff (204) in the container (104) to a target temperature (301);
- on the basis of the temperature data (210, 211) to determine an estimated value of a contents temperature (302) of the foodstuff (204) in the container (104);
- to determine a deviation of the estimated value of the contents temperature (302) from the target temperature (301); and
- to adjust a mixing mode of the mixing tool (107) during the temperature adjustment operation as a function of the deviation of the estimated value of the contents temperature (302) from the target temperature (301).

**2.** Kitchen appliance (100) according to claim 1, wherein the control unit (101) is designed to adjust an intensity of the mixing mode with which the foodstuff (204) in the container (104) is mixed, as a function of the deviation of the estimated value of the contents temperature (302) from the target temperature (301).

3. Kitchen appliance (100) according to one of the preceding claims, wherein

- the mixing mode can be adjusted by changing one or more parameters;
- the one or more parameters comprise

- a mixing speed of the mixing tool (107);
- a duration of a mixing phase, in which the mixing tool (107) is operated;
- a duration of an interruption phase, in which the mixing tool (107) is at a standstill; and/or
- a sequence over time of the mixing speed of the mixing tool (107); and

- the control unit (101) is designed to adjust at least one parameter as a function of the temperature data (210, 211).

4. Kitchen appliance (100) according to claim 3, wherein an intensity of the mixing mode is increased

- by increasing the mixing speed;
- by increasing the duration of a mixing phase, in particular relative to the duration of a subsequent interruption phase; and/or
- by reducing the duration of an interruption phase, in particular relative to a subsequent mixing phase.

5. Kitchen appliance (100) according to one of the preceding claims, wherein

- the control unit (101) is designed to select, as a function of the temperature data (210, 211), a predefined mixing mode from a plurality of different predefined mixing modes; and
- to differentiate the plurality of different predefined mixing modes from one another, in particular in respect of an intensity.

6. Kitchen appliance (100) according to one of the preceding claims, wherein the control unit (101) is designed

- to increase the intensity of the mixing mode as the deviation of the estimated value of the contents temperature (302) from the target temperature (301) increases; and/or
- to reduce the intensity of the mixing mode as the deviation of the estimated value of the contents temperature (302) from the target temperature (301) decreases.

7. Kitchen appliance (100) according to one of the preceding claims, wherein the control unit (101) is designed,

- to determine whether an amount of the deviation of the estimated value of the contents temperature (302) from the target temperature (301) is greater or smaller than a deviation threshold value;
- to operate the mixing tool (107) in a first mixing mode if it is determined that the amount of the deviation is greater than the deviation threshold value; and
- to operate the mixing tool (107) in a second mixing mode if it is determined that the amount of the deviation is smaller than the deviation threshold value; wherein the first mixing mode and the second mixing mode are different; and wherein in particular the first mixing mode has a higher intensity than the second mixing mode.

8. Kitchen appliance (100) according to one of the preceding claims, wherein

- the kitchen appliance (100) comprises a first temperature sensor (111), which is designed to capture first temperature data (211) in respect of a first temperature (321) at a first point of the container (104) and/or of the foodstuff (204);
- the kitchen appliance (100) comprises a second temperature sensor (110), which is designed to capture second temperature data (210) in respect of a second temperature (322) at a second point of the container (104) and/or of the foodstuff (204); and
- the control unit (101) is designed to adjust the mixing mode of the mixing tool (107) during the temperature adjustment operation as a function of the first temperature data (211) and as a function of the second temperature data (210), in particular as a function of the first temperature (321) and the second temperature (322).

9. Kitchen appliance (100) according to claim 8, wherein

**EP 3 771 374 B1**

- the temperature adjustment unit (105) is designed to adjust the temperature of an underside of the container (104); and
- the first point is arranged on the underside of the container (104); and
- the second point is arranged on a side wall of the container (104); wherein the second point is spaced apart from a base and/or from the underside of the container (104), in particular by 5 mm or more, or by 10 mm or more.

10. Kitchen appliance (100) according to one of claims 8 to 9, wherein the control unit (101) is designed

- to determine a deviation of the second temperature (322) from the first temperature (321); and
- to adjust the mixing mode, in particular an intensity of the mixing mode, as a function of the deviation of the second temperature (322) from the first temperature (321).

11. Kitchen appliance (100) according to claim 10, wherein the control unit (101) is designed

- to increase the intensity of the mixing mode as the deviation of the second temperature (322) from the first temperature (321) increases; and/or
- to reduce the intensity of the mixing mode as the deviation of the second temperature (322) from the first temperature (321) decreases.

12. Kitchen appliance (100) according to one of the preceding claims, wherein the control unit (101) is designed

- to determine contents information in respect of the foodstuff (204) that is located in the container (104); and
- to determine the mixing mode as a function of the contents information.

13. Kitchen appliance (100) according to claim 12, wherein

- the control unit (101) is designed to determine the contents information in respect of the foodstuff (204) on the basis of recipe data of a recipe for which the kitchen appliance (100) is being used; and/or
- the contents information

  - displays a degree of the sensitivity of the foodstuff (204) in respect of mixing; and/or
  - displays a viscosity of the foodstuff (204); and/or
  - displays a type of the foodstuff (204).

14. Method (400) for operating a mixing tool (107) of a kitchen appliance (100); wherein the kitchen appliance (100) comprises a container (104) for holding a foodstuff (204); wherein the kitchen appliance (100) comprises a temperature adjustment unit (105) which is designed to adjust the temperature of the container (104); wherein the method (400) comprises

- operation (401) of the temperature adjustment unit (105), in order during a temperature adjustment operation to adjust the temperature of the foodstuff (204) in the container (104) to a target temperature (301);
- determination (402) of temperature data (210, 211) in respect of a temperature of the container (104) and/or of the foodstuff (204) during the temperature adjustment operation;
- determination, on the basis of the temperature data (210, 211), of an estimated value of a contents temperature (302) of the foodstuff (204) in the container (104);
- determination of a deviation of the estimated value of the contents temperature (302) from the target temperature (301); and
- adjustment (403) of a mixing mode of the mixing tool (107) during the temperature adjustment operation as a function of the deviation of the estimated value of the contents temperature (302) from the target temperature (301).

**Revendications**

1. Robot de cuisine (100), dans lequel le robot de cuisine (100) comprend

- un récipient (104) recevant un aliment (204) ;
- une unité de mise à une température (105) configurée pour mettre le récipient (104) à une température ;

12

- au moins un capteur de température (110, 111) configuré pour détecter des données de température (210, 211) se rapportant à la température du récipient (104) et/ou de l'aliment (204) ;
- un moteur (102) configuré pour entraîner un ustensile d'agitation (107) dans le récipient (104) pour agiter l'aliment (204) ; et
- une unité de commande (101) configurée pour

- faire fonctionner l'unité de mise à une température (105) pour amener l'aliment (204) dans le récipient (104), pendant un processus de mise à une température, à une température cible (301) ;
- détecter, sur base des données de température (210, 211), une valeur estimée d'une température de contenu (302) de l'aliment (204) dans le récipient (104) ;
- détecter un écart de la valeur estimée de la température de contenu (302) par rapport à la température cible (301) ; et
- adapter un mode d'agitation de l'ustensile d'agitation (107) pendant le processus de mise à une température en fonction de l'écart de la valeur estimée de la température de contenu (302) par rapport à la température cible (301).

2. Robot de cuisine (100) selon la revendication 1, dans lequel l'unité de commande (101) est configurée pour adapter une intensité du mode d'agitation, à laquelle l'aliment (204) est agité dans le récipient (104), en fonction de l'écart de la valeur estimée de la température de contenu (302) par rapport à la température cible (301).

3. Robot de cuisine (100) selon l'une des revendications précédentes, dans lequel

- le mode d'agitation peut être adapté en changeant un ou plusieurs paramètres ;
- les un ou plusieurs paramètres comprennent,

- une vitesse d'agitation de l'ustensile d'agitation (107) ;
- une durée d'une phase d'agitation pendant laquelle l'ustensile d'agitation (107) est en fonctionnement ;
- une durée d'une phase d'interruption pendant laquelle l'ustensile d'agitation (107) est au repos ; et/ou
- un déroulement temporel de la vitesse d'agitation de l'ustensile d'agitation (107) ; et

- l'unité de commande (101) est configurée pour adapter au moins un paramètre en fonction des données de température (210, 211).

4. Robot de cuisine (100) selon la revendication 3, dans lequel une intensité du mode d'agitation est augmentée

- par une augmentation de la vitesse d'agitation ;
- par une augmentation de la durée d'une phase d'agitation, en particulier par rapport à la durée d'une phase d'interruption venant ensuite ; et/ou
- par une réduction de la durée d'une phase d'interruption, en particulier par rapport à une phase d'agitation venant ensuite.

5. Robot de cuisine (100) selon l'une des revendications précédentes, dans lequel

- l'unité de commande (101) est configurée pour sélectionner, en fonction des données de température (210, 211), un mode d'agitation prédéfini parmi une pluralité de différents modes d'agitation prédéfinis ; et
- la pluralité de différents modes d'agitation prédéfinis se distinguent l'un de l'autre en particulier par l'intensité.

6. Robot de cuisine (100) selon l'une des revendications précédentes, dans lequel l'unité de commande (101) est configurée pour

- augmenter l'intensité du mode d'agitation en intensifiant l'écart de la valeur estimée de la température de contenu (302) par rapport à la température cible (301) ; et/ou à
- réduire l'intensité du mode d'agitation en diminuant l'écart de la valeur estimée de la température de contenu (302) par rapport à la température cible (301).

7. Robot de cuisine (100) selon l'une des revendications précédentes, dans lequel l'unité de commande (101) est configurée pour

- déterminer si l'ampleur de l'écart de la valeur estimée de la température de contenu (302) par rapport à la température cible (301) est plus grande ou plus petite qu'une valeur de seuil d'écart ;
- faire fonctionner l'ustensile d'agitation (107) dans un premier mode d'agitation quand il est déterminé que l'ampleur de l'écart est plus grande que la valeur de seuil d'écart ; et
- faire fonctionner l'ustensile d'agitation (107) dans un deuxième mode d'agitation quand il est déterminé que l'ampleur de l'écart est plus petite que la valeur de seuil de l'écart ; le premier mode d'agitation et le deuxième mode d'agitation étant différents ; et en particulier le premier mode d'agitation présentant une intensité plus élevée que le deuxième mode d'agitation.

8. Robot de cuisine (100) selon l'une des revendications précédentes, dans lequel

- le robot de cuisine (100) comprend un premier capteur de température (111) configuré pour détecter des premières données de température (211) se rapportant à une première température (321) en un premier point du récipient (104) et/ou de l'aliment (204) ;
- le robot de cuisine (100) comprend un deuxième capteur de température (110) configuré pour détecter des deuxièmes données de température (210) se rapportant à une deuxième température (322) en un deuxième point du récipient (104) et/ou de l'aliment (204) ; et
- l'unité de commande (101) est configurée pour adapter le mode d'agitation de l'ustensile d'agitation (107) pendant le processus de mise à une température en fonction des premières données de température (211) et en fonction des deuxièmes données de température (210), en particulier en fonction de la première température (321) et de la deuxième température (322).

9. Robot de cuisine (100) selon la revendication 8, dans lequel

- l'unité de mise à une température (105) est configurée pour mettre à une température un côté inférieur du récipient (104) ; et
- le premier point se trouve sur le côté inférieur du récipient (104) ; et
- le deuxième point se trouve sur une paroi latérale du récipient (104); le deuxième point étant écarté d'un fond et/ou du côté inférieur du récipient (104) en particulier de 5 mm ou plus, ou de 10 mm ou plus.

10. Robot de cuisine (100) selon l'une des revendications 8 à 9, dans lequel l'unité de commande (101) est configurée pour

- détecter un écart de la deuxième température (322) par rapport à la première température (321) ; et
- adapter le mode d'agitation, en particulier une intensité du mode d'agitation, en fonction de l'écart de la deuxième température (322) par rapport à la première température (321).

11. Robot de cuisine (100) selon la revendication 10, dans lequel l'unité de commande (101) est configurée pour

- augmenter l'intensité du mode d'agitation si l'écart de la deuxième température (322) par rapport à la première température (321) s'intensifie ; et/ou
- réduire l'intensité du mode d'agitation si l'écart de la deuxième température (322) par rapport à la première température (321) diminue.

12. Robot de cuisine (100) selon l'une des revendications précédentes, dans lequel l'unité de commande (101) est configurée pour

- détecter des informations de contenu se rapportant à l'aliment (204), lequel se trouve dans le récipient (104) ; et à
- détecter le mode d'agitation en fonction des informations de contenu.

13. Robot de cuisine (100) selon la revendication 12, dans lequel

- l'unité de commande (101) est configurée pour détecter les informations de contenu se rapportant à l'aliment (204) sur base des données de recette d'une recette réalisée sur le robot de cuisine (100) ; et/ou
- les informations de contenu

  - indiquent un degré de sensibilité de l'aliment (204) se rapportant à l'agitation ; et/ou

- indiquent la viscosité de l'aliment (204) ; et/ou
- indiquent un type d'aliment (204).

14. Procédé (400) de fonctionnement d'un ustensile d'agitation (107) d'un robot de cuisine (100) ; dans lequel le robot de cuisine (100) comprend un récipient (104) recevant un aliment (204) ; le robot de cuisine (100) comprenant une unité de mise à une température (105) configurée pour mettre le récipient (104) à une température ; dans lequel le procédé (400) comprend

- le fonctionnement (401) de l'unité de mise à une température (105) pour amener l'aliment (204) dans le récipient (104), pendant un processus de mise à une température, à une température cible (301) ;
- la détection (402) de données de température (210, 211) se rapportant à une température du récipient (104) et/ou de l'aliment (204) pendant le processus de mise à une température ;
- la détection, sur base des données de température (210, 211), d'une valeur estimée d'une température de contenu (302) de l'aliment (204) dans le récipient (104) ;
- la détection d'un écart de la valeur estimée de la température de contenu (302) par rapport à la température cible (301) ; et
- l'adaptation d'un mode d'agitation de l'ustensile d'agitation (107) pendant le processus de mise à une température en fonction de l'écart de la valeur estimée de la température de contenu (302) par rapport à la température cible (301).

**Fig. 1a**

**Fig. 1b**

**Fig. 1c**

**Fig. 2**

**Fig. 3a**

**Fig. 3b**

400 ⌇

| Temperieren des Inhalts des Behälters |
| --- |

401

| Ermitteln von Temperaturdaten in Bezug auf die Temperatur des Inhalts |
| --- |

402

| Anpassen des Rührmodus in Abhängigkeit von den Temperaturdaten |
| --- |

403

**Fig. 4**

**IN DER BESCHREIBUNG AUFGEFÜHRTE DOKUMENTE**

**In der Beschreibung aufgeführte Patentdokumente**

- EP 2730203 A1
- CN 106774518 A
- WO 2011142451 A1
- DE 102010016024 A1